# EUROPEAN PATENT APPLICATION

(11) **EP 3 272 471 A2**
(43) Date of publication of application: **24.01.2018**
(21) Application number: 17181781.0
(22) Date of filing: 18.07.2017
(51) Int. Cl.: B25J 9/16

(54) **ROBOT APPARATUS, ROBOT CONTROLLING METHOD, PROGRAM, AND RECORDING MEDIUM**

(30) Priority: 20.07.2016 JP 2016142294; 07.07.2017 JP 2017133945
(71) Applicant: Canon Kabushiki Kaisha, Tokyo 146-8501 (JP)
(72) Inventor: MIURA, Akinari, Tokyo, Tokyo 146-8501 (JP)
(74) Representative: TBK

(57) **Abstract**

Such a situation that excessive loads repetitively act on a force sensor and a robot arm and an excessive load acts on each work piece is suppressed, and even if there is a variation in a mass of a first work piece gripped by a robot hand, a high-precise fitting operation can be executed. A control unit for impedance-controlling the operation of a robot arm so that one work piece is come into contact with another work piece moves a robot hand for gripping the one work piece, and sets a value acquired before the start of the impedance control to a first target value. The impedance control is made based on the first target value.

## Description

### BACKGROUND OF THE INVENTION

### Field of the Invention

The present invention relates to a technique of robot control for making impedance control.

### Description of the Related Art

An articulated robot arm is constructed by coupling a plurality of links through joint portions. A robot hand as an end effector is attached to the link of a front edge of the robot arm through a force sensor.

The operation of the robot is controlled by a controlling apparatus. The controlling apparatus controls the operation of the robot, thereby allowing the robot to execute various kinds of producing operations. As a producing operation, for example, there is a fitting operation for fitting a first work piece to a second work piece. Specifically speaking, the second work piece is fixed to a holding tool and the first work piece is fitted to the second work piece by the robot. At the time of the fitting operation, the controlling apparatus makes such impedance control that while the first work piece is moved in such a moving direction that it is fitted to the second work piece, a robot arm is made operative so as to decrease a detection value of a force in the direction which perpendicularly crosses the moving direction.

On the other hand, at the time of the fitting operation, a weight of the robot hand and a weight of the first work piece gripped by the robot hand are applied to the force sensor. When the robot arm is made operative, a vibration occurs in the robot hand due to a self-weight of the robot hand and the weight of the first work piece. Ordinarily, in the impedance control, it is intended to make the robot arm operative in such a direction as to decrease a detection value of the force sensor. Therefore, if the impedance control is started before the first work piece is made contact with the second work piece, since the front edge of the robot arm operates while finely vibrating, it is intended to correct the position of the robot hand in the vibrating direction as an applying direction of the force. Consequently, there is a case where a deviation amount of the first work piece to the second work piece increases and the fitting operation fails.

On the other hand, Japanese Patent Application Laid-Open No. 2010-142909 proposes such a technique that until a first work piece gripped by a robot hand is come into contact with a second work piece, a robot arm is made operative by position control, and after it was come into contact with the second work piece, the robot arm is made operative by impedance control.

According to the technique disclosed in Japanese Patent Application Laid-Open No. 2010-142909, a discrimination about whether or not the first work piece has been come into contact with the second work piece is made by checking whether or not a detection value of a force sensor is equal to or larger than a threshold value. As a detection value of a force sensor, gravity components such as weight of the robot hand, weight of the first work piece, and the like are included. For example, when a moving direction in which the first work piece is moved is a direction which perpendicularly crosses a gravity direction, that is, when it is a horizontal direction, the gravity components are superimposed to a force detection component in the direction which perpendicularly crosses a moving direction. Therefore, according to the technique disclosed in Japanese Patent Application Laid-Open No. 2010-142909, a gravity compensation value adapted to compensate the gravity components included in the detection value of the force sensor is acquired from an orientation of the robot and a mass of an end effector by an arithmetic operation and the detection value is corrected by the gravity compensation value.

However, there is a case where if the control is switched from the position control to the impedance control when the first work piece is come into contact with the second work piece, an excessive load acts on the force sensor through the robot hand. There is also a case where an excessive load also acts on each work piece.

That is, in the position control, the operation of the robot arm is controlled so that the first work piece is held at a target position. When the first work piece gripped by the robot hand is come into contact with the second work piece, the first work piece intends to move in such a direction that it is deviated from the target position by an external force received from the second work piece. In the position control, since the robot arm is controlled so as to push and return the first work piece in such a direction as to cancel a positional deviation, a force to press the first work piece to the second work piece increases. Thus, there is a case where when the first work piece gripped by the robot hand is come into contact with the second work piece, an excessive load acts on each work piece and the force sensor. There is also a case where when the excessive load repetitively acts on the force sensor, the force sensor deteriorates, a detecting precision of the force sensor decreases, or the force sensor is broken. There is also a case where when the excessive load repetitively acts on the robot arm, the robot arm deteriorates or is broken. Further, there is a case where quality of each work piece and, moreover, quality of manufactured articles deteriorate due to the fitting operation.

There is a variation of a mass of the actual first work piece which is gripped by the robot hand. Therefore, as a mass of the first work piece, if the gravity compensation value is arithmetically operated by using a predetermined value (design value or the like), since there is a variation of the mass of the first work piece, an error caused by the variation of the mass of the first work piece is included in the gravity compensation value. An error caused by the deviation of the gripping position of the first work piece due to the robot hand is also included in the gravity compensation value. Therefore, in the impedance control of the robot arm which was gravity compensated by a predetermined gravity compensation value, it is difficult to execute the precise assembling operation.

It is, therefore, an aspect of the present invention that such a situation that excessive loads repetitively act on a force sensor and a robot arm is suppressed and such a situation that an excessive load acts on each work piece is suppressed, thereby enabling a high-precise fitting operation to be executed even if there is a variation in a mass of a first work piece gripped by a robot hand.

### SUMMARY OF THE INVENTION

According to an aspect of the present invention, a robot apparatus comprises: a robot arm; a robot hand which is supported by the robot arm and is configured to grip a first work piece; a force sensor configured to receive a force from the robot hand; and a control unit configured to impedance control an operation of the robot arm so that the first work piece is come into contact with a second work piece, wherein the control unit executes a first process for moving the robot hand and setting a value acquired before the impedance control is started to a first target value and a second process for making the impedance control on the basis of the first target value.

According to another aspect of the present invention, a robot controlling method whereby an operation of a robot arm of a robot having a robot arm, a robot hand which is supported by the robot arm and is configured to grip a first work piece, and a force sensor configured to receive a force from the robot hand is impedance-controlled so that the first work piece is come into contact with a second work piece, comprises: a first step of moving the robot hand and setting a value acquired before the impedance control is started to a first target value and a second step of making the impedance control on the basis of the first target value.

According to still another aspect of the present invention, a manufacturing method of an article whereby an operation of a robot arm of a robot having a robot arm, a robot hand which is supported by the robot arm and is configured to grip a first work piece, and a force sensor configured to receive a force from the robot hand is impedance-controlled and the article in which the first work piece is in contact with a second work piece is manufactured, comprises: a first step of moving the first work piece and setting a value acquired before the impedance control is started to a first target value and a second step of making the impedance control on the basis of the first target value.

Further features of the present invention will become apparent from the following description of exemplary embodiments with reference to the attached drawings.

### BRIEF DESCRIPTION OF THE DRAWINGS

FIG. 1 is a diagram illustrating a schematic construction of a robot apparatus according to the first embodiment.
FIG. 2 is a schematic diagram illustrating a state where a robot hand has been positioned to an operation start position in the first embodiment.
FIG. 3 is a flowchart illustrating a manufacturing method (robot controlling method) of an article according to the first embodiment.
FIGS. 4A, 4B and 4C are diagrams for describing the operation of a robot at the time of executing the fitting operation.
FIGS. 5A, 5B and 5C are diagrams for describing the operation of the robot at the time of executing the fitting operation.
FIG. 6 is an explanatory diagram illustrating a detection value of a force sensor to a time and a moving velocity of the robot hand which grips a work piece.
FIG. 7 is a schematic diagram illustrating a state where a robot hand has been positioned to an operation start position in the second embodiment.

### DESCRIPTION OF THE EMBODIMENTS

Preferred embodiments of the present invention will now be described in detail in accordance with the accompanying drawings.

### [First Embodiment]

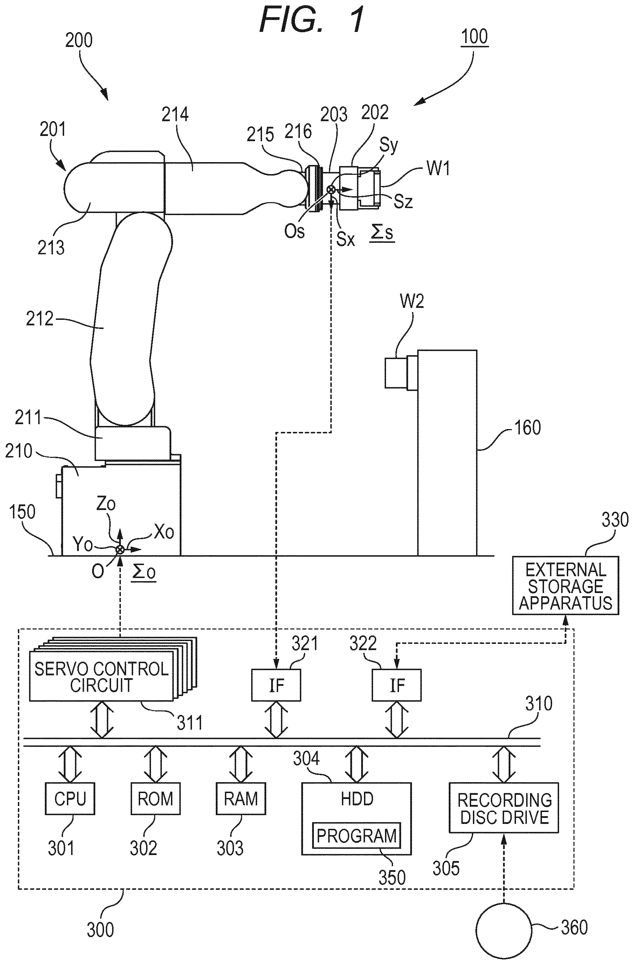

FIG. 1 is a diagram illustrating a schematic construction of a robot apparatus according to the first embodiment. A robot apparatus 100 is a producing apparatus which is arranged on a production line of a factory or the like. The robot apparatus 100 is constructed by having a robot 200 as a working robot and a controlling apparatus 300 for controlling the operation of the robot 200. The robot 200 has a robot arm 201 of a vertical articulated (for example, 6 joints) and a robot hand 202 as an end effector supported at a front edge of the robot arm 201. The robot 200 also has a force sensor 203 provided between the robot arm 201 and the robot hand 202.

The robot arm 201 has a plurality of links 210 to 216 and is constructed in such a manner that the plurality of links 210 to 216 are rotationally or turnably (swingably) coupled by joints. A base edge (link 210) of the robot arm 201 constructs a base member and is fixed to a stand 150. That is, the base edge (link 210) of the robot arm 201 is a fixed edge and a front edge (link 216) of the robot arm 201 is a free edge. The robot hand 202 is attached to the front edge (link 216) of the robot arm 201 through the force sensor 203.

The robot hand 202 has a plurality of fingers, can grip a work piece W1 as a first work piece by closing the plurality of fingers, and can release the gripping of the work piece W1 by opening the plurality of fingers. A holding tool 160 for holding a work piece W2 as a second work piece is provided for the stand 150. The work piece W1 is a ring-shaped member. The work piece W2 is a member having a cylindrical portion to which the work piece W1 is fitted. The work piece W1 gripped by the robot hand 202 is come into contact with, is assembled to, or is fitted to the work piece W2, so that an article is manufactured. Shapes of the work pieces W1 and W2 are not limited to those mentioned above. For example, the work piece W1 may be a cylindrical member and the work piece W2 may be a member having a fitting hole.

The force sensor 203 detects a force which is applied to the robot hand 202 or the front edge of the robot arm 201 (force which is received from the robot hand 202 or the front edge of the robot arm 201). The force sensor 203 is a 6-axis force sensor. An origin Os of a sensor coordinate system ∑s consisting of three axes Sx, Sy, and Sz which perpendicularly cross each other is set into the front edge of the robot arm 201, that is, into the force sensor 203. The force which is detected by the force sensor 203 consists of force components (Fx, Fy, Fz) in the directions of the three axes Sx, Sy, and Sz which perpendicularly cross each other and moment components (Mx, My, Mz) around the respective axes Sx, Sy, and Sz. Therefore, the force sensor 203 can detect the force from any direction which acts on the front edge of the robot arm 201. As a force sensor 203, a sensor of any one of an electrostatic capacitance type, a strain gauge type, an optical type, and other types can be used.

The controlling apparatus 300 has a CPU (Central Processing Unit) 301 as a control unit (processing unit). The controlling apparatus 300 also has a ROM (Read Only Memory) 302, a RAM (Random Access Memory) 303, and an HDD (Hard Disk Drive) 304 as a storing unit. The controlling apparatus 300 further has a recording disc drive 305, a plurality of (6 of the same number as that of the joints of the robot arm 201) servo control circuits 311, and interfaces 321 and 322. Although the component elements of the controlling apparatus 300 have been enclosed in a same casing, they may be arranged in different casings. The servo control circuit 311 may be arranged in the robot arm 201.

The ROM 302, RAM 303, HDD 304, the recording disc drive 305, servo control circuits 311, and interfaces 321 and 322 are connected to the CPU 301 through a bus 310.

A basic program such as BIOS or the like has been stored in the ROM 302. The RAM 303 is a storage apparatus for temporarily storing various kinds of data such as a result of an arithmetic operating process of the CPU 301 and the like. The HDD 304 is a storage apparatus for storing the result of the arithmetic operating process of the CPU 301, various kinds of data acquired from the outside, or the like. The HDD 304 also records a program 350 for allowing the CPU 301 to execute various kinds of arithmetic operating processes. The CPU 301 executes each step of a robot controlling method (manufacturing method of an article) on the basis of the program 350 recorded (stored) in the HDD 304. A robot operating program disclosed by a robot language has been stored in the HDD 304. The recording disc drive 305 can read out various kinds of data, program, or the like recorded in a recording disc 360.

The CPU 301 controls the operation of each robot 200 by outputting a position instruction to each servo control circuit 311. Each servo control circuit 311 is arranged at each joint of the robot arm 201, is connected to a motor (not shown) for driving each joint, and drives the motor in accordance with the position instruction.

The force sensor 203 is connected to the interface 321. The interface 321 outputs a detection result of the force sensor 203 to the CPU 301 as a signal which can be processed by the CPU 301 and shows a detection value.

An external storage apparatus 330 such as rewritable non-volatile memory, externally attached HDD, or the like is connected to the interface 322.

Although the first embodiment will be described with respect to a case where a computer-readable recording medium is the HDD 304 and the program 350 is stored in the HDD 304, the invention is not limited to such a case. The program 350 may be recorded into any recording medium so long as it is a computer-readable recording medium. For example, as a recording medium for supplying the program 350, the ROM 302, the recording disc 360, external storage apparatus 330, or the like illustrated in FIG. 1 may be used. A specific example will now be made. As a recording medium, a flexible disk, an HDD, an SSD, a CD-ROM, a DVD-ROM, a magnetic tape, a non-volatile memory such as a USB memory or the like, a ROM, or the like can be used. Although a case where the HDD 304 is used as a storing unit will be described, an SSD or a rewritable non-volatile memory may be used.

An origin O of an absolute coordinate system ∑o consisting of three axes Xo, Yo, and Zo which perpendicularly cross each other is set into the front edge of the robot arm 201. A tool center point (TCP) is set into the front edge of the robot 200, that is, into the robot hand 202. The TCP is expressed by three parameters showing the position and three parameters showing the orientation while the origin O of the absolute coordinate system ∑o set into the front edge of the robot arm 201 is used as a reference. A teaching point as a target value of the TCP is disclosed in the robot operating program stored in the HDD 304 as a storing unit.

The CPU 301 interpolates between the teaching points in accordance with an interpolating method disclosed in the robot operating program and generates trajectory data of the robot arm 201 converted into a value of each joint by an inverse kinematics calculation. As an interpolating method of interpolating between the teaching points, there are various kinds of methods such as linear interpolation, circular interpolation, joint interpolation, Spline interpolation, B-Spline interpolation, Bezier curve, and the like. The trajectory data is a set of position instructions of every time (for example, every 1msec). The position instruction indicates a target rotating position of each motor. The CPU 301 controls the operation of the robot arm 201 by outputting the position instruction to each servo control circuit 311.

As control of the operation of the robot arm 201, there are position control and impedance control. In the position control, the operation of the robot arm 201 is controlled in such a manner that the TCP set into the fingertips of the robot 200 becomes the target position by the three axes Xo, Yo, and Zo of the absolute coordinate system ∑o. In other words, the operation of the robot arm 201 is controlled in such a manner that a joint angle of each joint of the robot arm 201 is equal to a target joint angle, that is, a rotating position of the motor of each joint is equal to a target rotating position. At this time, the operation of the robot arm 201 is controlled irrespective of the detection value of the force detected by the force sensor 203. Therefore, when an external force acts on the fingertips of the robot 200, control is made so as to keep the TCP to the target position against the external force. Accordingly, if the external force acts on the fingertips of the robot 200 when the position control is made, control is made so as to increase a rigidity of the robot arm 201.

In the impedance control, the operation of the robot arm 201 is controlled in such a manner that in a region out of a range of a dead zone, which will be described hereinafter, the detection value of the force detected by the force sensor 203 approaches a target value (more specifically speaking, 0). Therefore, if the external force acts on the fingertips of the robot 200, control is made so as to move the fingertips in such a direction that the external force acts. For example, if the external force acts on the work piece W1 because the work piece W1 gripped by the robot hand 202 got hitched on the work piece W2 or the like, the external force is propagated to the force sensor 203 through the robot hand 202 which grips the work piece W1. Therefore, the operation of the robot arm 201 is controlled in such a direction as to decrease the external force detected by the force sensor 203, that is, in such a direction as to cancel the hitch. Accordingly, when the impedance control is made, control is made so as to increase a flexibility of the robot arm 201.

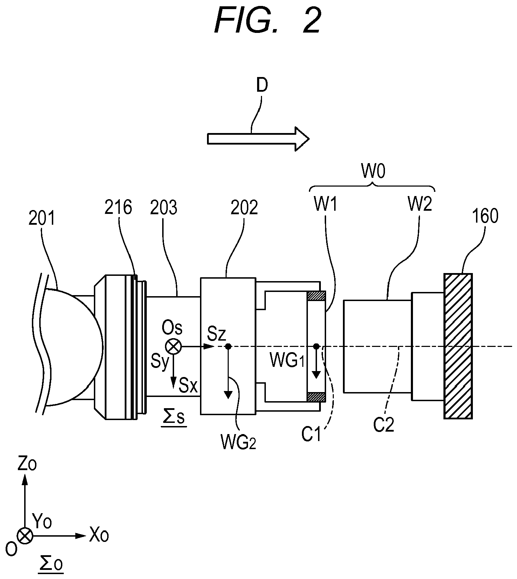

FIG. 2 is a schematic diagram illustrating a state where the robot hand has been positioned to an operation start position in the first embodiment.

In the first embodiment, the fitting operation for fitting the work piece W1 to the work piece W2 is executed and an article W0 in which the work piece W1 has been fitted to the work piece W2 is manufactured. When executing the fitting operation, the CPU 301 selectively executes either the position control or the impedance control.

The force sensor 203 is fixed to a flange surface of the link 216. The Sz axis of the sensor coordinate system ∑s extends in the direction perpendicular to the flange surface. The robot hand 202 is attached to the front edge of the force sensor 203 and grips the work piece W1. A center axis C2 of the work piece W2 as a work piece to be fitted is fixed in the direction parallel with the Xo axis of the absolute coordinate system ∑o.

In the first embodiment, the Sz axis of the sensor coordinate system ∑s and the Xo axis of the absolute coordinate system ∑o enter a state where they are parallel, and the fitting operation for fitting the work piece W1 to the work piece W2 is executed in a state where the Sx axis of the sensor coordinate system ∑s and the Zo axis of the absolute coordinate system ∑o are parallel. FIG. 2 illustrates a state where the robot arm 201 has been controlled in such a manner that a center axis C1 of the work piece W1 overlaps with the center axis C2 of the work piece W2. As illustrated in FIG. 2, in the first embodiment, the position where the work piece W1 is not come into contact with the work piece W2 is assumed to be an operation start position where the fitting operation is started (that is, the position where the impedance control is started). From the state where the work piece has been positioned to such an operation start position, the work piece W1 is moved in a moving direction D as a direction of the Xo axis (direction of the Sz axis) and the fitting operation for fitting the work piece W1 to the work piece W2 is executed.

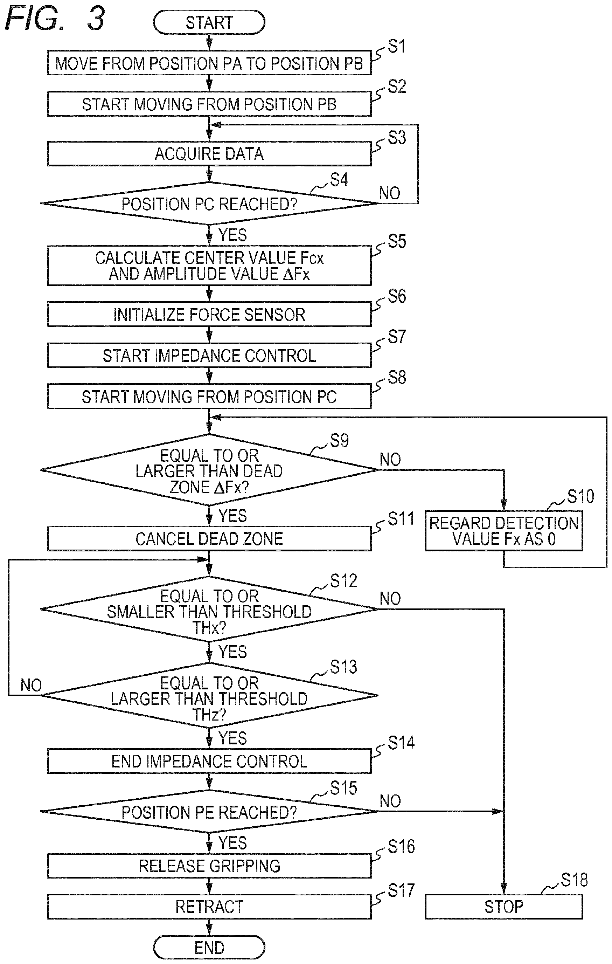

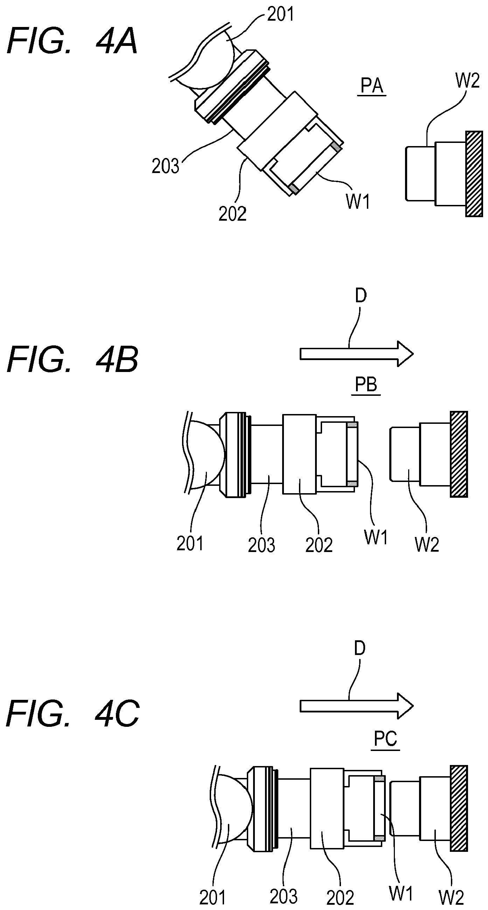

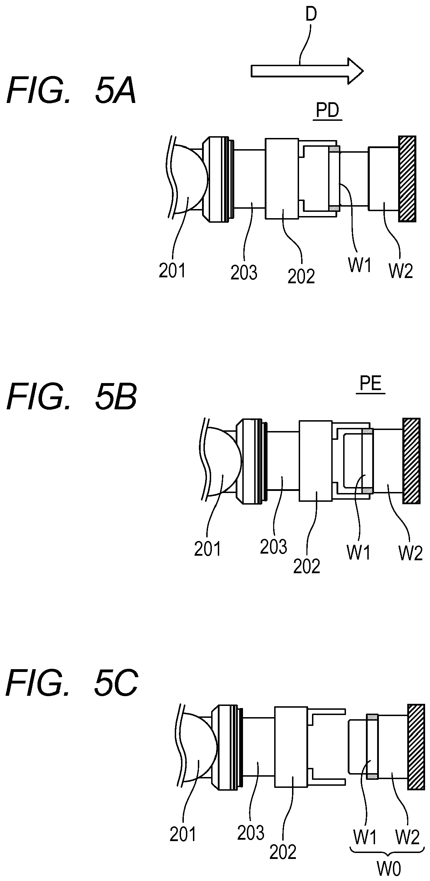

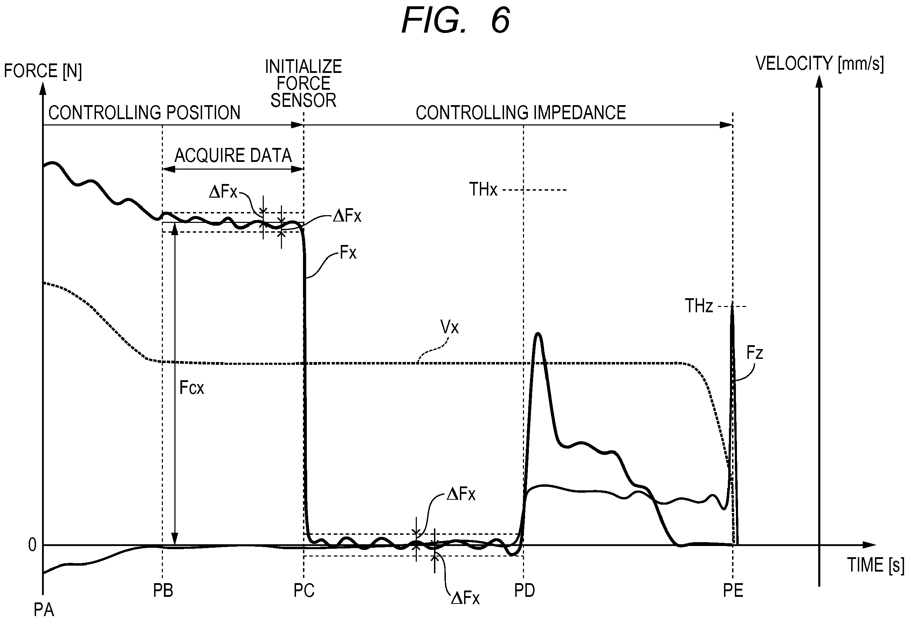

FIG. 3 is a flowchart illustrating a manufacturing method of an article, that is, a robot controlling method according to the first embodiment. FIGS. 4A to 4C and FIGS. 5A to 5C are diagrams for describing the operation of the robot 200 at the time of executing the fitting operation. FIG. 6 is an explanatory diagram illustrating a detection value of the force sensor to a time and a moving velocity of the robot hand which grips a work piece. The first embodiment will be described on the assumption that the moving direction D in which the fitting operation is executed is a horizontal direction.

FIG. 4A is a diagram illustrating a state where the work piece W1 has been moved to a position PA. FIG. 4B is a diagram illustrating a state where the work piece W1 has been moved to a position PB. FIG. 4C is a diagram illustrating a state where the work piece W1 has been moved to a position PC. FIG. 5A is a diagram illustrating a state where the work piece W1 has been moved to a position PD. FIG. 5B is a diagram illustrating a state where the work piece W1 has been moved to a position PE. FIG. 5C is a diagram illustrating a state where the robot 200 has been retracted from the work piece W1.

The position PA is a position of the work piece W1 on the way of the movement of the work piece W1 to the next position PB after it was gripped by the robot hand 202. The position PB is a position where the work piece W1 faces the work piece W2 and the work piece W1 is not come into contact with the work piece W2. For example, the position PB is a position where an interval between the work pieces W1 and W2 is equal to 10 [mm]. The position PC is a position where the work piece W1 faces the work piece W2 and the work piece W1 is not come into contact with the work piece W2, and it is a position where the fitting operation is started, that is, a position where the impedance control is started (operation start position). The position PC is a position which is closer to the work piece W2 than the position PB. For example, the position PC is a position where the interval between the work pieces W1 and W2 is equal to 5 [mm]. Those positions PA, PB, and PC are positions which have been preset by teaching. The position PD is a position where the work piece W1 is contact with the work piece W2. The position PE is a position where the fitting of the work piece W1 to the work piece W2 is completed, that is, a position where the impedance control is ended (operation completion position).

After completion of the movement of the work piece W1 to the position PA, the robot arm 201 is continuously made operative from the position PA to the position PE.

First, the CPU 301 controls the operation of the robot arm 201 so that the work piece W1 is moved from the position PA (FIG. 4A) where the work piece W1 has been gripped by the robot hand 202 to the position PB (FIG. 4B) (S1). In step S1, the CPU 301 controls the operation of the robot arm 201 by the position control. By this position control, the work piece W1 faces the work piece W2 so that the center axis C1 of the work piece W1 almost coincides with the center axis C2 of the work piece W2.

Subsequently, the CPU 301 starts the control (position control) of the robot arm 201 in such a manner that the work piece W1 is moved from the position PB (FIG. 4B) to the position PC (FIG. 4C) in a state where the work piece W1 has been gripped by the robot hand 202 (S2). At this time, it is desirable that a velocity Vx is constant and is set to, for example, 35 [mm/sec]. Herein, "the velocity is constant" is not limited to only a case wherein the velocity, for example Vx, does not change precisely, but includes a case that an absolute value of a difference between a maximum value and a minimum value of the velocity is equal to or smaller than 10% thereof. In this instance, the CPU 301 controls the operation of the robot arm 201 and moves the front edge of the robot arm 201 in the moving direction D while keeping the orientation of the front edge of the robot arm 201 to a constant orientation. That is, in step S2, the CPU 301 controls the operation of the robot arm 201 so that the work piece W1 is moved in the moving direction D.

The robot hand 202 has a weight WG₂ and the work piece W1 gripped by the robot hand 202 also has a weight WG₁ (FIG. 2). During the operation of the robot arm 201, the robot hand 202 vibrates by an inertia force of the work piece W1 gripped by the robot hand 202 and an inertia force of the robot hand 202. Specifically speaking, the force sensor 203 has a spring member (flexible member) and a device for detecting a deformation of the spring member. The spring member of the force sensor 203 is deformed by the inertia force of the work piece W1 and the inertia force of the robot hand 202, so that the robot hand 202 vibrates. Such a vibration appears on a detection value of the force of the force sensor 203. Such a vibration appears typically in the direction of gravity. For example, as illustrated in FIG. 6, a detection value Fx of the force in the direction of the Sx axis of the force sensor 203 oscillates.

Therefore, when the work piece W1 is made operative from the position PB to the position PC, the CPU 301 acquires the detection value (data) of the force of the force sensor 203 (S3). The CPU 301 discriminates whether or not the work piece W1 has reached the position PC (S4). If the work piece W1 does not reach yet (S4: NO), the processing routine is returned to step S3 and the acquisition of the data from the force sensor 203 is continued until the work piece W1 reaches the position PC. The number of data of the force sensor 203 which is acquired by a processing loop of steps S3 and S4 may be properly determined. In the first embodiment, for example, a sampling period of the data is set to 1 [µsec] and a sampling time from the position PB to the position PC is set to 0.2 [sec].

In this manner, the CPU 301 controls the operation of the robot arm 201 so as to move the work piece W1 from the position PB to the position PC in steps S2 to S4. At this time, if the velocity Vx is constant, the robot arm 201 can be operated so as not to cause an acceleration in the robot hand 202 and the work piece W1 (constant velocity process, constant velocity step). At this time, it is desirable to rectilinearly move the robot hand 202 and the work piece W1 so as not to cause an acceleration in the robot hand 202 and the work piece W1.

If it is determined that the work piece W1 has reached the position PC (FIG. 4C) (S4: YES), the CPU 301 acquires a center value of the detection values Fx and Fy and a maximum amplitude value to the center value in order to acquire a target value from the detection values of the force sensor 203 (S5: arithmetic operating process, arithmetic operating step). That is, in step S5, the center value of the detection values of the forces in the directions of the axes Sx and Sy as directions which intersect (perpendicularly cross) the moving direction D of the force sensor 203 acquired for a period of time during which the robot hand was moved from the position PB to the position PC and an amplitude of the vibration are acquired.

The first embodiment will be described hereinbelow on the assumption that the detection value Fy is equal to 0 and the robot hand 202 has vibrated only in the gravity direction. That is, as illustrated in FIG. 6, a center value Fcx of the detection values Fx acquired for a period of time during which the constant velocity process was executed from the position PB to the position PC and a maximum amplitude value ΔFx to the center value Fcx are acquired. The CPU 301 stores those values Fcx and ΔFx into the storing unit such as an HDD 304 or the like in FIG. 1. The above process is referred to as a first process. Herein, "the center value" is an average value of total data of values acquired through filtering out high frequency component by a low-pass filter (e.g. 50Hz) from data acquired by the force sensor.

Subsequently, the CPU 301 makes the impedance control (second process) on the basis of a first target value. In the first embodiment, while making the impedance control for allowing the detection value Fx to approach the first target value (in this instance, center value Fcx), the operation of the robot arm is controlled so that the work piece W1 is moved from the position PC (FIG. 4C) to the position PE (FIG. 5B) in the moving direction D (S6 to S14: fitting process). In this instance, it is desirable to make the impedance control for making the robot arm 201 operative so that the detection value Fx in the direction which perpendicularly crosses (intersects) the moving direction among the detection values of the forces detected by the force sensor 203 approaches the center value Fcx while moving the work piece W1 in the moving direction D. In this manner, when the work piece W1 reaches the position PC, the CPU 301 switches the control of the operation of the robot arm 201 from the position control to the impedance control.

In steps S8 to S10, the CPU 301 makes the impedance control on the basis of the first target value for a period of time from the position PC (FIG. 4C) to the position PD (FIG. 5A). In the first embodiment, the first target value is regarded as a detection value (in this instance, it is regarded that the detection value Fx is the same value as the center value Fcx) and the impedance control is made. It is desirable that the period of time from the position PC to the position PD is a period of time until the detection value of the force sensor exceeds a third target value (in this instance, such a detection value Fx that a deviation |Fx - Fcx| of the detection value Fx to the center value Fcx and the amplitude value ΔFx are equalized) after the movement of the work piece W1 from the position PC was started.

Processes in step S6 and subsequent steps will be specifically described hereinbelow. The CPU 301 initializes the force sensor 203 (S6). Specifically speaking, the CPU 301 corrects the detection value Fx to a value in which the center value Fcx is used as a reference as illustrated in FIG. 6. By the center value Fcx, a gravity component due to the weight WG₂ of the robot hand 202 and the weight WG₁ of the work piece W1 is subtracted from the detection value Fx.

As mentioned above, each time the fitting operation for fitting the work piece W1 to the work piece W2 is executed, the center value Fcx as a gravity compensation value is measured. Therefore, even if the work piece W1 gripped by the robot hand 202 has a variation of the weight WG₁, the gravity component can be precisely compensated. Even if there is a variation in the gripping position of the work piece W1 in the robot hand 202, the gravity component can be precisely compensated.

Subsequently, the CPU 301 starts the movement from the position PC (S8) simultaneously with the start of the impedance control (S7). In the impedance control, control is made so that the detection value Fx after the correction approaches 0.

The CPU 301 controls the operation of the robot arm 201 so that the work piece W1 moves at a predetermined velocity for a period of time from the position PC to the position PD. That is, such a situation that an acceleration occurs in the robot hand 202 (work piece W1) is prevented.

At this time, it is desirable that subsequently to the processes of steps S2 to S4, the CPU 301 can move the work piece W1 in the moving direction D at the same velocity Vx as the velocity at which the work piece W1 was moved by those processes. That is, it is desirable to move the work piece W1 under the same conditions as those in the first process. This is because by such processes, the state of the vibration of the robot hand 202 becomes almost similar to that in the case of the first process.

The CPU 301 sets the amplitude value ΔFx to a dead zone and discriminates whether or not a magnitude of the detection value Fx after the correction is equal to or larger than a third target value. In this instance, whether or not the magnitude of the detection value Fx after the correction is equal to or larger than the dead zone ΔFx is discriminated (S9). If the magnitude of the detection value Fx after the correction is smaller than the dead zone ΔFx (S9: NO), it is regarded that the detection value Fx after the correction is equal to 0 (S10). That is, it is regarded that the detection value Fx detected (that is, not corrected) from the force sensor 203 is equal to the center value Fcx (first target value).

That is, the apparatus is in a state where for a period of time from the position PC to the position PD, the work piece W1 is not come into contact with the work piece W2 and the robot hand 202 is vibrating in a manner similar to the processes of steps S2 to S4. Therefore, for a period of time during which the robot hand 202 is vibrating, the dead zone ΔFx is provided and the impedance control is made.

Assuming that the impedance control is made without providing the dead zone ΔFx, it is intended to correct the position of the robot hand 202 (work piece W1) in the vibrating direction, that is, in such a direction that the external force acts. Consequently, there is a risk that a deviation amount of the center axis C1 of the work piece W1 to the center axis C2 of the work piece W2 increases.

On the other hand, in the first embodiment, since the detection value Fx after the correction is regarded as 0 for the period of time until the work piece W1 is come into contact with the work piece W2 by steps S9 and S10, the deviation amount of the center axis C1 to the center axis C2 can be decreased. Specifically speaking, such a deviation amount can be set to a deviation amount as much as the vibration of the robot hand 202. Thus, the work piece W1 can be desirably guided from the position PC to the position PD.

If it is determined in step S9 that the magnitude of the detection value Fx after the correction is equal to or larger than the dead zone ΔFx (S9: YES), since the work piece W1 is come into contact with the work piece W2, the CPU 301 cancels the dead zone (S11) and continues the impedance control. It is assumed that the processes which are executed after it was determined that the discrimination result is YES in step S9 are the third process.

In the first embodiment, in the crossing direction which intersects (perpendicularly crosses) the moving direction D, the work piece W1 is come into contact with the work piece W2 by the impedance control. That is, like a case of the position control, it is intended that the force which intends to cancel the deviation in the crossing direction which occurs when the work piece W1 is come into contact with the work piece W2 is not applied to the work pieces W1 and W2. Thus, since only a contact force at the time when the work piece W1 is come into contact with the work piece W2 is applied to the work pieces W1 and W2, such a situation that excessive loads are applied to the work pieces W1 and W2 and the force sensor 203 can be suppressed.

While continuing the movement of the work piece W1 in the moving direction D, the CPU 301 discriminates whether or not the detection value Fx of the force in the direction which crosses the moving direction D is equal to or smaller than a preset threshold value THx (S12). If it is determined that the detection value Fx is larger than the threshold value THx (S12: NO), since the work piece W1 was come into contact with the work piece W2 and the fitting operation failed, the CPU 301 stops the operation of the robot arm 201 (S18).

If it is determined that the detection value Fx is equal to or smaller than the threshold value THx (S12: YES), the CPU 301 discriminates whether or not the detection value Fz is equal to or larger than a second target value (in this instance, threshold value THz) (S13). If it is determined that the detection value Fz is smaller than the threshold value THz (S13: NO), the CPU 301 returns to step S12 and continues the impedance control while moving the work piece W1 in the moving direction D.

If it is determined that the detection value Fz is equal to or larger than the threshold value THz as a second target value (S13: YES), the CPU 301 ends the impedance control (S14). In this manner, in the impedance control in steps S11 to S14, since the dead zone ΔFx is cancelled, the fitting operation by the impedance control can be executed at a high sensitivity on the basis of the detection value of the force sensor 203. Therefore, such a situation that the work piece W1 gets hitched on the work piece W2 during the fitting operation is suppressed and the fitting operation can be executed at a high precision.

Since the detection value Fy is regarded as 0 in the first embodiment, it is presumed that the second target value is a value in the z direction. However, a proper direction may be selected in accordance with the moving direction of the robot hand. It is not always necessary to set the second target value to one direction, but it may be set to two or three directions.

The CPU 301 discriminates whether or not the work piece W1 has reached the position PE (FIG. 5B) (S15). If it is determined that the work piece W1 has reached the position PE (S15: YES), since the fitting operation is successful, the CPU 301 releases the gripping of the work piece W1 (S16). It is assumed that the processes which are executed until it is determined that the work piece W1 has reached the position PE are the third process. As illustrated in FIG. 5C, the CPU 301 controls the robot arm 201 so that the robot hand 202 retracts to a retracting position (S17).

If it is determined that the work piece W1 does not reach the position PE yet (S15: NO), since the fitting operation failed, the CPU 301 stops the operation of the robot arm 201 (S18).

As mentioned above, according to the first embodiment, since the dead zone ΔFx is provided and the impedance control is made for a period of time during which the work piece W1 moves from the position PC to the position PD, such a situation that the excessive loads repetitively act on the robot arm 201 and the force sensor 203, particularly, on the force sensor 203 is suppressed. Therefore, such a situation that the robot arm 201 and the force sensor 203 deteriorate or are broken can be suppressed. Such a situation that the excessive load acts on each of the work pieces W1 and W2 is suppressed. Thus, quality of each of the work pieces W1 and W2 and, consequently, the article W0 is improved.

In the first embodiment, there is no need to preliminarily acquire the data of the weight of the work piece W1. Even if there is a variation in the mass of the work piece W1 gripped by the robot hand 202 or even if there is a variation in the gripping position of the work piece W1 to the robot hand 202, since the center value Fcx is measured and the gravity compensation is performed every work piece W1, the fitting operation can be executed at a high precision.

According to the first embodiment, when the work piece W1 is rectilinearly moved and the fitting operation is executed, a linearity at the time of the impedance control can be assured. According to the first embodiment, when the work piece W1 is moved from the position PC to the position PD, the fitting operation can be executed without reducing the moving speed of the work piece W1.

Although the case where the vibration occurs in the direction of the Sx axis has been described above, even when a vibration occurs in the direction of the Sy axis, it is sufficient to provide a dead zone and make the impedance control in a manner similar to that mentioned above. According to the present embodiment, the threshold in the step S12 is set as "THx", no problem would be raised even in case of using the threshold value THz direction.

### [Second Embodiment]

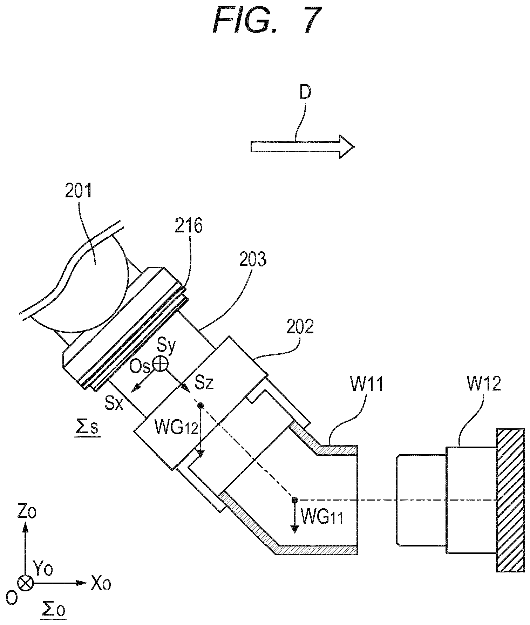

Subsequently, a manufacturing method of an article by a robot apparatus according to the second embodiment, that is, a robot controlling method will be described. FIG. 7 is a schematic diagram illustrating a state where a robot hand has been positioned to an operation start position in the second embodiment.

In the second embodiment, since a construction of the robot apparatus is similar to that in the first embodiment, a description of each component element is omitted. In the second embodiment, a shape of each work piece to which the fitting operation is executed differs. A work piece W11 as a first work piece is a cylinder member having an L-character shape bent at 45°.

Therefore, in a state where the front edge of the robot arm 201 is inclined by 45° to the horizontal state, it is moved in the direction of the Xo axis as a horizontal direction and the fitting operation for fitting the work piece 11 to a work piece W12 as a second work piece is executed. That is, there is such a positional relation that the Sx axis of the sensor coordinate system ∑s is inclined by 45° to the Zo axis of the absolute coordinate system ∑o and the Sz axis of the sensor coordinate system ∑s is inclined by 45° to the Xo axis of the absolute coordinate system ∑o. The direction of a weight WG₁₁ of the work piece W11 and the direction of a weight WG₁₂ of the robot hand 202 are inclined by 45° to the Sx axis of the sensor coordinate system ∑s.

In the second embodiment, the moving direction D of the work piece W11 and the sensor coordinate system ∑s do not coincide. Therefore, in step S5, a force in the direction of the Xo axis as a moving direction D and forces in the direction of the Zo axis and the direction of the Yo axis serving as directions which perpendicularly cross such a direction are acquired as detection values from the three detection values Fx, Fy, and Fz of the force sensor 203. In the case of the second embodiment, the gravity component is included in the force in the direction of the Zo axis. Therefore, in the second embodiment, a center value of the force in the direction of the Zo axis and an amplitude value are acquired and the force sensor 203 is initialized in step S6 in a manner similar to the first embodiment.

Therefore, in the fitting process in steps S6 to S14, while the work piece W11 is moved in the direction of the Xo axis, the impedance control is made so that the detection values of the forces in the direction of the Zo axis and the direction of the Yo axis approach 0.

In a manner similar to the first embodiment, in step S9, the amplitude value acquired in step S5 is set to a dead zone. For the period of time until a deviation of the detection value to the center value in the direction of the Zo axis exceeds the amplitude value after the start of the movement of the work piece W11 from the operation start position, the detection value is equal to the center value. That is, the detection value of the force sensor 203 is corrected to a value in which the first target value (in this instance, center value) is used as a reference, the detection value after the correction is regarded as 0, and the impedance control is made.

Thus, according to the second embodiment, even if a shape of the work piece to be fitted differs, the fitting operation can be executed in a manner similar to the first embodiment.

The present invention is not limited to the above-described embodiments but many modifications within a technical idea of the present invention are possible. The effects disclosed in the embodiments are nothing but the most desirable effects caused from the present invention. The effects according to the present invention are not limited to those disclosed in the embodiments.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Although the embodiments have been described above with respect to the case where the robot arm 201 is the robot arm of the vertical articulated, the invention is not limited to it. For example, the robot arm may be various kinds of robot arms such as robot arm of a horizontal articulated, robot arm of a parallel link, orthogonal robot, and the like.

In the foregoing embodiments, when the detection value of the force is equal to or larger than the dead zone, the dead zone is cancelled. However, even after the detection value of the force was equal to or larger than the dead zone, if a fitting length is short or the detection value is not so largely influenced by the vibration, there is no need to cancel the dead zone.

Although the embodiments have been described above with respect to the case where the moving direction of the first work piece which is subjected to the fitting operation is the horizontal direction, the invention is not limited to it. The moving direction may be any one of the vertical direction, the inclined direction, and the like.

According to the present invention, such a situation that the excessive load repetitively acts on the force sensor is suppressed. Such a situation that the excessive load acts on each work piece is suppressed. Even if there is a variation in the mass of the first work piece gripped by the robot hand, the fitting operation can be executed at a high precision.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

Such a situation that excessive loads repetitively act on a force sensor and a robot arm and an excessive load acts on each work piece is suppressed, and even if there is a variation in a mass of a first work piece gripped by a robot hand, a high-precise fitting operation can be executed. A control unit for impedance-controlling the operation of a robot arm so that one work piece is come into contact with another work piece moves a robot hand for gripping the one work piece, and sets a value acquired before the start of the impedance control to a first target value. The impedance control is made based on the first target value.

## Claims

1. A robot apparatus comprising:
a robot arm;
a robot hand which is supported by the robot arm and is configured to grip a first work piece;
a force sensor configured to receive a force from the robot hand; and
a control unit configured to impedance control an operation of the robot arm so that the first work piece is come into contact with a second work piece,
wherein the control unit executes
a first process for moving the robot hand and setting a value acquired before the impedance control is started to a first target value and
a second process for making the impedance control on the basis of the first target value.

2. An apparatus according to claim 1, wherein after the second process, the control unit executes a third process for making the impedance control until a detection value of the force sensor is equal to or larger than a preset second target value.

3. An apparatus according to claim 2, wherein in the second process, the control unit corrects the detection value to a value in which the first target value is used as a reference, and regards the detection value after the correction as 0.

4. An apparatus according to any one of claims 1 to 3, wherein in the first process, the control unit moves the robot hand to an operation start position at a predetermined velocity.

5. An apparatus according to any one of claims 1 to 4, wherein, in the second process, the control unit sets a velocity, at which the robot hand is moved, to the same velocity as a velocity at which the robot hand was moved in the first process.

6. An apparatus according to any one of claims 1 to 5, wherein, in the second process, the control unit sets a direction, in which the robot hand is moved, to the same direction as a direction in which the robot hand was moved in the first process.

7. An apparatus according to any one of claims 1 to 6, wherein a direction in which the control unit moves the robot hand in the first process is a horizontal direction.

8. An apparatus according to claim 4, wherein the detection value which is used by the control unit in the first process is a value in the direction which crosses a moving direction in which the robot hand moves from the operation start position toward an operation completion position.

9. An apparatus according to any one of claims 1 to 8, wherein the control unit sets the value acquired before the impedance control is started in the first process to a third target value, and executes the second process for a period of time until the detection value of the force sensor exceeds the third target value.

10. A robot controlling method whereby an operation of a robot arm of a robot having a robot arm, a robot hand which is supported by the robot arm and is configured to grip a first work piece, and a force sensor configured to receive a force from the robot hand is impedance-controlled so that the first work piece is come into contact with a second work piece, comprising:
a first step of moving the robot hand and setting a value acquired before the impedance control is started to a first target value and
a second step of making the impedance control on the basis of the first target value.

11. A method according to claim 10, further comprising a third step of making the impedance control until a detection value of the force sensor is equal to or larger than a preset second target value after the second step.

12. A method according to claim 10 or 11, wherein the value acquired before the impedance control is started in the first step is set to a third target value, and the second step is executed for a period of time until a detection value of the force sensor exceeds the third target value.

13. A manufacturing method of an article whereby an operation of a robot arm of a robot having a robot arm, a robot hand which is supported by the robot arm and is configured to grip a first work piece, and a force sensor configured to receive a force from the robot hand is impedance-controlled and the article in which the first work piece is in contact with a second work piece is manufactured, comprising:
a first step of moving the first work piece and setting a value acquired before the impedance control is started to a first target value and
a second step of making the impedance control on the basis of the first target value.

14. A method according to claim 13, further comprising a third step of making the impedance control until a detection value of the force sensor is equal to or larger than a preset second target value after the second step.

15. A method according to claim 13 or 14, wherein the value acquired before the impedance control is started in the first step is set to a third target value, and the second step is executed for a period of time until a detection value of the force sensor exceeds the third target value.

16. A program for causing a computer to execute the steps of the robot controlling method according to any one of claims 10 to 12.

17. A non-transitory computer-readable storage medium storing the program according to claim 16.
